# DEMANDE DE BREVET EUROPEEN

(11) **EP 4 810 145 A1**
(43) Date de publication de la demande: **23.09.2026**
(21) Numéro de dépôt: 26165263.0
(22) Date de dépôt: 17.03.2026
(51) Int. Cl.: B01D 46/02, B01D 50/20, B01D 45/12, B01D 45/16, B01D 46/00

(54) **UNITE DE FILTRATION**

(30) Priorité: 18.03.2025 FR 2502761
(71) Demandeur: Gergaud, Eric, 22680 Binic-Etables-sur-Mer (FR)
(72) Inventeur: Gergaud, Eric, 22680 Binic-Etables-sur-Mer (FR)
(74) Mandataire: Novagraaf Technologies

(57) **Abrégé**

La présente invention a pour objet une unité de filtration (10) de particules en suspension dans un flux gazeux, comportant un corps principal (24) placé au-dessus d'un entonnoir (30) et comportant une paroi latérale (22) et au moins un élément filtrant (26) poreux destiné à être traversé par le flux gazeux vicié (16), l'élément filtrant (26) formant l'interface entre une partie amont du corps principal (24) en communication fluidique avec l'entonnoir (30), et une partie avale du corps principal (24) en communication fluidique avec l'évacuation (18) de flux gazeux purifié (20) ; l'unité de filtration (10) comportant un déflecteur (46) s'étendant depuis la paroi latérale (22) du corps principal (24), au-dessus de l'admission (14) de flux gazeux vicié (16), vers l'intérieur de l'unité de filtration (10) selon une forme de cuvette évidée en son centre.

## Description

### Domaine technique de l'invention

La présente description concerne le domaine du dépoussiérage d'environnements industriels.

La description concerne plus particulièrement une unité de filtration de particules en suspension dans un flux gazeux.

### Arrière-plan technique

Certaines activités industrielles génèrent des particules par exemple sous forme de poussières qui se retrouvent en suspension dans l'environnement gazeux de l'enceinte industrielle. Il est connu d'utiliser des unités de filtration afin de procéder au dépoussiérage d'un tel environnement gazeux.

Le fonctionnement d'une unité de filtration repose essentiellement sur deux mécanismes. Le premier mécanisme correspond à la décantation d'une première partie des particules au moyen d'un effet cyclonique. Dans cette étape de décantation, le flux gazeux chargé en particules est introduit dans l'unité de filtration selon un mouvement giratoire. Sous l'action de la force centrifuge, les particules solides prises dans le tourbillon se déplacent vers la paroi de l'unité de filtration, y perdent leur vitesse par frottement, s'agglomèrent et tombent dans le fond de l'unité de filtration. Le deuxième mécanisme correspond à la filtration à proprement parler du flux gazeux. Dans cette étape de filtration, le flux gazeux à dépoussiérer est mis en circulation à travers un module filtrant ce qui permet de retenir les poussières et les particules solides demeurant dans le gaz.

Au cours du fonctionnement de l'unité de filtration, les particules s'accumulent de manière superficielle ou en profondeur sur le module filtrant. Ce phénomène de colmatage du module filtrant réduit l'efficacité de l'unité de filtration. En particulier, l'accumulation de particules sur le module filtrant engendre une perte de charge dans la circulation du flux gazeux à travers l'unité de filtration ce qui a pour effet d'augmenter les dépenses énergétiques et de dégrader les performances de l'unité de filtration en termes de débit, de pression et de qualité de filtration.

Une solution connue en soi pour décolmater le module filtrant consiste à injecter de l'air comprimé dans la partie avale de l'unité de filtration de manière à inverser momentanément le sens du flux d'air traversant le module filtrant afin de débarrasser la paroi du module filtrant de la poussière accumulée à sa surface. Les particules ainsi décollées de la surface du module filtrant se déposent par gravité dans le fond de l'unité de filtration pour être ensuite évacuées de la même manière que les particules déposées dans l'étape de décantation.

Cependant, le flux gazeux entrant s'oppose au dépôt des particules par gravité à la fois dans l'étape de décantation et dans l'étape de décolmatage.

Il existe un besoin de favoriser le dépôt des particules par gravité au fond de l'unité de filtration. Il existe également un besoin de limiter le colmatage du module filtrant.

### Résumé de l'invention

L'invention propose une unité de filtration de particules en suspension dans un flux gazeux, l'unité de filtration comportant :
- une admission de flux gazeux vicié,
- une évacuation de flux gazeux purifié,
- un entonnoir de décantation en communication fluidique avec l'admission de flux gazeux vicié,
- un corps principal placé au-dessus de l'entonnoir et comportant une paroi latérale et au moins un élément filtrant poreux destiné à être traversé par le flux gazeux vicié, l'élément filtrant formant l'interface entre :
   -- une partie amont du corps principal en communication fluidique avec l'entonnoir, et
   -- une partie avale du corps principal en communication fluidique avec l'évacuation de flux gazeux purifié ;
l'unité de filtration comportant un déflecteur s'étendant depuis la paroi latérale du corps principal, au-dessus de l'admission de flux gazeux vicié, vers l'intérieur de l'unité de filtration selon une forme de cuvette évidée en son centre.

Selon d'autres caractéristiques de l'invention :
- le corps principal et l'entonnoir de décantation présentent un même axe de symétrique de révolution A ;
- le déflecteur comporte une première portion de forme tronconique ayant le même axe de révolution A que l'entonnoir et que le corps cylindrique et ayant une section circulaire orthogonalement à l'axe A de rayon R croissant avec la hauteur ;
- le déflecteur comporte une deuxième portion dans le prolongement de la première portion en partie inférieure de forme tubulaire d'axe A ;
- l'unité de filtration comporte une ailette de déviation du flux faisant saillie du déflecteur en regard de l'admission de flux gazeux vicié ;
- le déflecteur présente un rétrécissement dans un quatrième cadran du déflecteur, le premier cadran étant en regard de l'admission de flux gazeux vicié et les cadrans étant ordonnés dans le sens du flux ;
- l'unité de filtration comporte un tronçon intermédiaire présentant une forme tronconique présentant le même axe de révolution A que l'entonnoir et que le corps cylindrique et présentant une section circulaire orthogonalement à l'axe A de rayon décroissant avec la hauteur, le tronçon intermédiaire étant placé à la jonction entre le corps principal et l'entonnoir ;
- l'admission de flux gazeux vicié est située dans le tronçon intermédiaire ;
- l'angle a1 du tronçon intermédiaire par rapport à l'axe A a une valeur absolue inférieure à celle de l'angle a2 de l'entonnoir par rapport à l'axe A ;
- le déflecteur s'étend sur au moins la moitié de la hauteur du tronçon intermédiaire.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] est une vue en perspective d'une unité de filtration selon un premier mode de réalisation de l'invention ;
[Fig.2] est une vue de face de l'unité de filtration de la figure 1 montrant l'admission de flux gazeux vicié et l'évacuation de flux gazeux purifié ;
[Fig.3] est une vue éclatée et de face de l'unité de filtration de la figure 1 montrant le déflecteur ;
[Fig.4] est une vue en coupe verticale de l'unité de filtration de la figure 3 selon le plan de coupe IV-IV ;
[Fig.5] est une vue de face d'un déflecteur selon un deuxième mode de réalisation de l'invention ;
[Fig.6] est une vue de dessus du déflecteur de la figure 5 montrant l'orientation de l'ailette ;
[Fig.7] est une vue de dessus d'un déflecteur selon un troisième mode de réalisation de l'invention ;
[Fig.8] est une vue de face du déflecteur de la figure 7 ;
[Fig.9] est une vue de face d'un déflecteur selon un quatrième mode de réalisation de l'invention ;
[Fig.10] est une vue schématique de l'unité de filtration de la figure 1 montrant la circulation d'air au sein de l'unité de filtration ;
[Fig.11] est une représentation en vue de derrière des résultats d'une simulation montrant les trajectoires des particules au sein d'une unité de filtration de l'art antérieur ;
[Fig.12] est une représentation en vue de derrière des résultats d'une simulation montrant les trajectoires des particules au sein de l'unité de filtration des figures 1 à 5 ;
[Fig.13] est une représentation en vue de devant des résultats d'une simulation montrant les zones au sein de l'unité de filtration de l'art antérieur de la figure 6 dans lesquelles le flux présente une vitesse supérieure à un seuil prédéterminé ;
[Fig.14] est une représentation en vue de devant des résultats d'une simulation montrant les zones au sein de l'unité de filtration des figures 1 à 5 dans lesquelles le flux présente une vitesse supérieure à un seuil prédéterminé ;
[Fig.15] est une représentation en vue de dessus des résultats d'une simulation montrant les zones au sein de l'unité de filtration de l'art antérieur de la figure 6 dans lesquelles le flux présente une vitesse supérieure à un seuil prédéterminé ;
[Fig.16] est une représentation en vue de dessus des résultats d'une simulation montrant les zones au sein de l'unité de filtration des figures 1 à 5 dans lesquelles le flux présente une vitesse supérieure à un seuil prédéterminé.

### Description détaillée de l'invention

Pour la description de l'invention et la compréhension des revendications, on adoptera à titre non limitatif les orientations verticale, longitudinale et transversale selon le repère V, L, T indiqué aux figures dont l'axe vertical V est aligné avec le champ de gravité terrestre et les axes longitudinal L et transversal T s'étendent dans un plan horizontal. Par convention, l'axe vertical est orienté du bas vers le haut, l'axe longitudinal L est orienté de l'arrière vers l'avant et l'axe transversal est orienté de la droite vers la gauche.

Dans la description qui va suivre, des éléments identiques, similaires ou analogues seront désignés par les mêmes chiffres de référence.

Certaines activités industrielles, par exemple dans le domaine de la découpe de bois, de la soudure ou des fours très haute température, émettent des particules solides qui se retrouvent en suspension dans l'environnement industriel concerné, c'est-à-dire dans l'atmosphère ou dans le flux gazeux en circulation. Ces particules peuvent être en matière organique, métallique ou minérale. Ce sont typiquement des poussières présentant une granulométrie de l'ordre de 2 à 600 micromètres (µm).

Pour des raisons sanitaires ou pour des raisons de qualité, il peut être nécessaire de retirer ces particules ou ces poussières de l'environnement industriel. L'invention propose une unité de filtration permettant cette opération de dépoussiérage d'environnement chargé en particules.

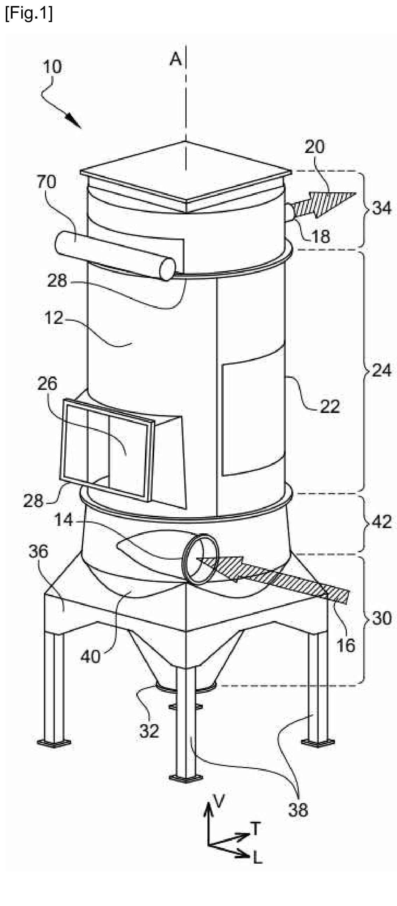

La figure 1 illustre une unité de filtration 10 selon un premier mode de réalisation de l'invention. L'unité de filtration 10 comprend une enceinte 12 comportant :
- une admission 14 de flux gazeux vicié 16,
- une évacuation 18 de flux gazeux purifié 20.

L'enceinte 12 est délimitée par une paroi latérale 22. La paroi latérale 22 est réalisée par exemple en tôle métallique.

L'enceinte 12 comporte un corps principal 24. Le corps principal 24 a une forme cylindrique présentant une symétrie de révolution autour d'un axe vertical A.

Le corps principal 24 comporte des éléments filtrants 26 placés à l'intérieur de l'enceinte 12. Les éléments filtrants 26 comportent une membrane poreuse comportant une ou plusieurs couches filtrantes destinées à être traversées par une partie du flux gazeux vicié 16 qui est ainsi débarrassé de la majorité des poussières qu'il contient, les particules de poussière étant retenues par une couche filtrante. En traversant les éléments filtrants 26, le flux gazeux vicié 16 est assaini et devient en sortie un flux gazeux purifié 20.

Ainsi, l'ensemble des éléments filtrants 26 forme une interface entre :
- une partie amont du corps principal 24 en communication fluidique avec l'admission 14, et
- une partie avale du corps principal 24 en communication fluidique avec l'évacuation 18.

Dans l'exemple, la membrane des éléments filtrants 26 forme une poche délimitant une cavité et comportant une ouverture à une de ses extrémités. Le flux gazeux vicié 16 pénètre dans l'élément filtrant 26 depuis l'extérieur de l'élément filtrant 26 vers l'intérieur. Après la traversée de la membrane de l'élément filtrant 26, le flux gazeux se retrouve à l'intérieur de la cavité sous forme purifiée puis il s'évacue par l'ouverture de l'élément filtrant 26.

Les éléments filtrants 26 sont par exemple des manches cylindriques d'axe vertical ou des cartouches de filtre.

Dans l'exemple représenté, le corps principal 24 comporte un évent 28 dans la paroi latérale 22 en partie inférieure du corps principal 24. L'évent 28 présente la forme d'une fenêtre rectangulaire fermée par un obturateur agencé pour réaliser une soupape de décompression de sorte à éviter une dégradation de l'unité de filtration 10 en cas d'explosion au sein du flux gazeux vicié 16. Dans l'exemple de la figure 1, les éléments filtrants 26 sont visibles à travers l'évent 28.

L'enceinte 12 comporte, à son extrémité inférieure, un entonnoir 30 de décantation. L'entonnoir 30 de décantation présente une forme tronconique d'axe de révolution A vertical et présentant une section circulaire orthogonalement à l'axe A de rayon croissant avec la hauteur.

L'entonnoir 30 de décantation est en communication fluidique avec l'admission 14 de flux gazeux vicié 16.

L'entonnoir 30 comporte un embout 32 de fixation d'un moyen de récupération des poussières. L'embout 32 est situé à la pointe de l'entonnoir 30, à l'extrémité inférieure de l'entonnoir 30. Le moyen de récupération des poussières (non représenté) est typiquement un bac ou un sac amovible.

L'enceinte 12 comporte, à son extrémité supérieure, une tête 34. La tête 34 présente une forme cylindrique d'axe de révolution A vertical et de même diamètre que le corps principal 24. La tête 34 est placée dans le prolongement du corps principal 24 en partie supérieure.

La tête 34 comporte l'évacuation 18 de flux gazeux purifié 20. L'évacuation 18 est placée dans la paroi latérale 22 sur le côté gauche de l'unité de filtration 10.

De manière optionnelle, la tête 34 comporte une bombonne 70 d'air comprimé permettant d'injecter de l'air à haute pression dans les éléments filtrants 26 à contre-sens du flux gazeux 16,20 de sorte à décolmater les éléments filtrants 26.

L'unité de filtration 10 comporte une base 36 percée en son centre selon une géométrie complémentaire à la forme de l'entonnoir 30 localement. La base 36 repose sur quatre pieds 38. Ainsi, la base 36 reçoit l'entonnoir 30 en partie supérieure dans un espace 40 plus étroit que la base supérieure de l'entonnoir 30, l'espace 40 étant conformé pour maintenir l'unité de filtration 10 de sorte que l'axe A soit aligné avec la direction verticale.

L'enceinte 12 de l'unité de filtration 10 comporte en outre un tronçon intermédiaire 42.

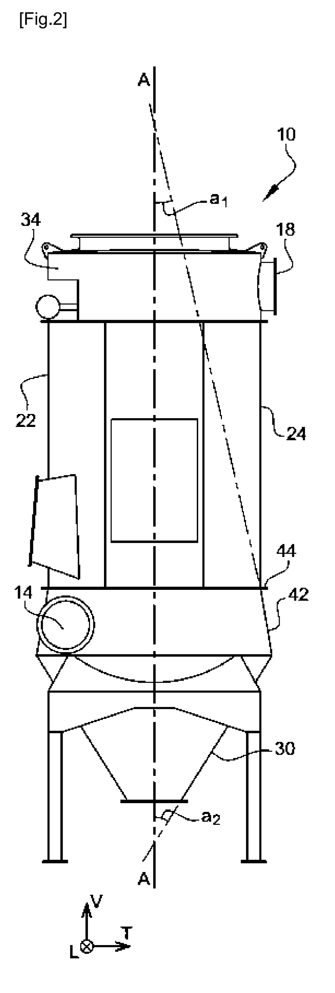

Le tronçon intermédiaire 42 est décrit plus spécifiquement en rapport avec la figure 2. Le tronçon intermédiaire 42 est placé à la jonction entre l'entonnoir 30 et le corps principal 24. Dans l'exemple représenté, le tronçon intermédiaire 42 est soudé à l'entonnoir 30. En outre, le tronçon intermédiaire est fixé au corps principal 24 par une première bride 44. En variantes, le tronçon intermédiaire 42 peut être venu de matière avec l'entonnoir 30 et/ou avec le corps principal 24, ou encore, le tronçon intermédiaire 42 peut être fixé à l'entonnoir 30 et/ou au corps principal 24 par d'autres moyens, par exemple par un montage en force permettant un emboîtement.

Dans l'exemple représenté, le tronçon intermédiaire 42 présente une forme tronconique présentant le même axe de révolution A que l'entonnoir et que le corps cylindrique et présentant une section circulaire orthogonalement à l'axe A de rayon décroissant avec la hauteur.

Le tronçon intermédiaire 42 présente un angle a1 par rapport à l'axe A, l'angle a1 étant la moitié de l'angle du cône tronqué correspondant à la forme du tronçon intermédiaire 42. L'entonnoir 30 présente un angle a2 par rapport à l'axe A, l'angle a2 étant la moitié de l'angle du cône tronqué correspondant à la forme de l'entonnoir 30. L'angle a1 du tronçon intermédiaire par rapport à l'axe A a une valeur absolue inférieure à celle de l'angle a2 de l'entonnoir par rapport à l'axe A.

En variante, le tronçon intermédiaire 42 peut présenter une forme cylindrique d'axe de révolution A.

Le tronçon intermédiaire 42 comporte l'admission 14 de flux gazeux vicié 16. L'admission 14 est placée dans la paroi latérale 22 sur l'avant de l'unité de filtration 10. L'admission 14 est une conduite tubulaire de gaz d'axe horizontal. L'admission 14 est tangentielle horizontalement à la paroi latérale 22.

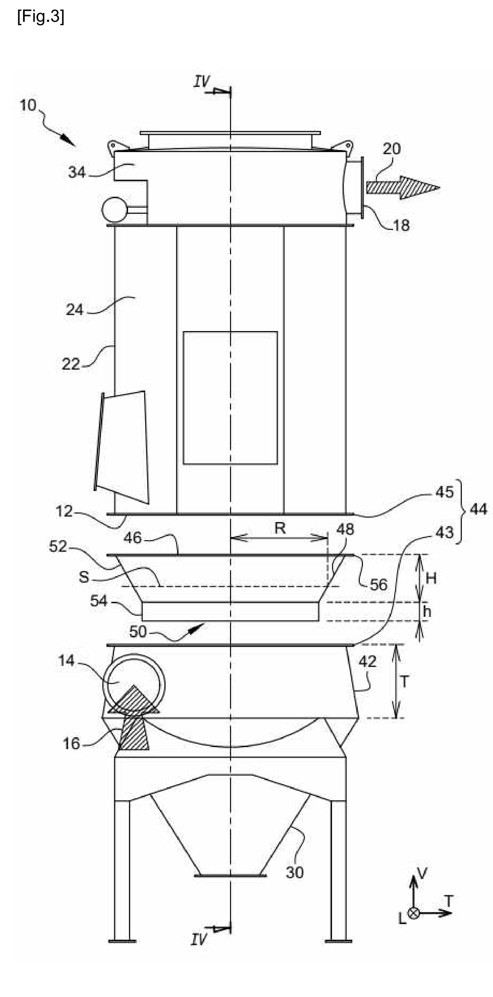

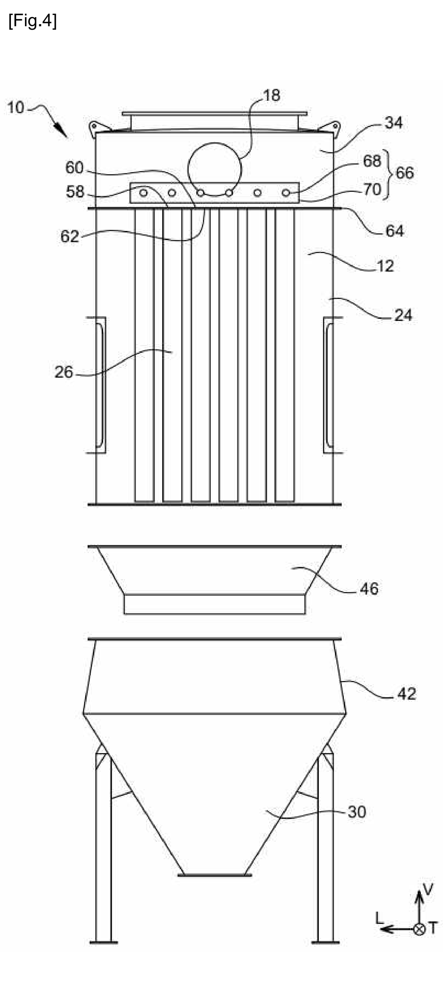

L'intérieur du tronçon intermédiaire 42 est décrit plus spécifiquement en référence à la figure 3 et à la figure 4 présentant des vues éclatées de l'unité de filtration 10.

Selon une particularité de l'invention, l'unité de filtration 10 comporte un déflecteur 46. Le déflecteur 46 est placé à l'intérieur de l'enceinte 12. Le déflecteur 46 est fixé à la paroi latérale 22 au-dessus de l'admission 14 de flux gazeux vicié 16. Le déflecteur 46 s'étend depuis la paroi latérale 22 du corps principal 24 de manière centripète. Le déflecteur 46 forme une cuvette présentant une inclinaison 48 vers le bas de l'unité de filtration 10. Le déflecteur 46 est évidé en son centre de manière à ménager un passage 50 pour le flux gazeux vicié 16 à travers le déflecteur 46.

Dans l'exemple de la figure 3 et de la figure 4, le déflecteur 46 comporte une première portion 52 de forme tronconique ayant le même axe de révolution A que l'entonnoir 30 et que le corps principal 24. La première portion 52 a une section S circulaire orthogonalement à l'axe A de rayon R croissant avec la hauteur.

Le déflecteur 46 comporte une deuxième portion 54 dans le prolongement de la première portion 52 en partie inférieure de forme tubulaire cylindrique d'axe A. La deuxième portion 54 présente une hauteur h significativement inférieure à la hauteur H de la première portion 52.

Dans l'exemple représenté, le tronçon intermédiaire 42 a une hauteur légèrement supérieure au diamètre de l'admission 14 de flux gazeux vicié 16 de manière à permettre l'intégration de l'admission 14 sans fragiliser la structure du tronçon intermédiaire 42. Cependant, la hauteur du tronçon intermédiaire 42 est suffisamment proche de la hauteur de l'admission 14 afin de favoriser un écoulement du flux gazeux vicié 16 à l'intérieur du tronçon intermédiaire 42 sur une hauteur sensiblement constante depuis l'admission 14.

Le déflecteur 46 s'étend sur une hauteur (h+H) sensiblement égale à la hauteur T du tronçon intermédiaire 42. Plus largement, le déflecteur 46 s'étend sur au moins la moitié de la hauteur T tronçon intermédiaire 42. La paroi latérale 22 du tronçon intermédiaire 42 et le déflecteur 46 délimitent un parcours du flux gazeux vicié 16 présentant une section dans un plan radial ayant une aire sensiblement égale à l'aire de la section de l'admission 14.

Le déflecteur 46 comporte un rebord 56 périphérique pris en étau et pincé entre une portion supérieure 45 de la première bride 44 à l'extrémité inférieure du corps principal 24 et une portion inférieure 43 de la première bride 44 à l'extrémité supérieure du tronçon intermédiaire 42. La première bride 44 peut comporter des orifices traversés par des vis maintenues en place par des écrous de manière à maintenir et à serrer le pincement entre l'extrémité inférieure du corps principal 24 et l'extrémité supérieure du tronçon intermédiaire 42.

La figure 4 est une vue en coupe selon le plan de coupe IV-IV représenté à la figure 3 qui montre l'intérieur de l'enceinte 12. La figure 4 montre que l'unité de filtration 10 comporte également un support 58 de fixation des éléments filtrants 26. Le support 58 est une plaque s'étendant horizontalement à l'interface entre le corps principal 24 et la tête 34. Le support 58 est percé d'orifices 60 traversants. Le nombre d'orifices 60 est égal au nombre d'éléments filtrants 26. Chaque élément filtrant 26 est fixé de manière étanche au support 58, l'ouverture 62 de l'élément filtrant 26 étant connectée à l'orifice 60 correspondant.

La tête 34 est fixée au corps principal 24 par une deuxième bride 64. Le support 58 est pris en étau et pincé entre l'extrémité inférieure de la tête 34 et l'extrémité supérieure du corps principal 24 au niveau de la deuxième bride 64.

La tête 34 comporte également un module de décolmatage 66. Le module de décolmatage 66 comporte des tuyaux 68 raccordés à la bombonne 70 d'air comprimé. Chaque tuyau 68 s'étend horizontalement depuis la bombonne 70 au-dessus d'un alignement d'orifices 60 du support 58 d'éléments filtrants 26. Chaque tuyau 68 comporte en regard de chaque orifice 60 une bouche permettant l'injection d'air comprimé dans l'élément filtrant 26 correspondant à travers l'orifice 60 lors d'une opération de décolmatage.

En variante, le module de décolmatage 66 peut comporter un autre système de décolmatage des éléments filtrants 26 reposant par exemple sur une mise en vibration de l'unité de filtration 10.

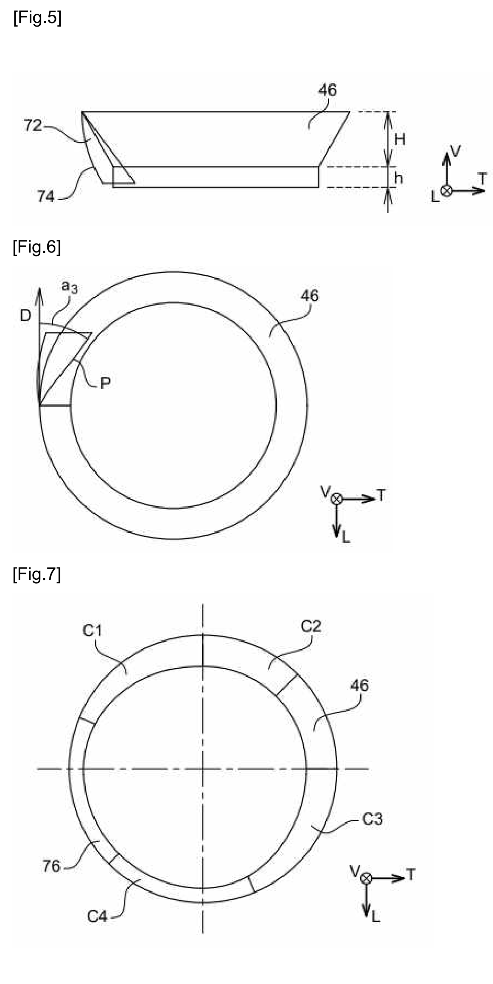

Les figures 5 à 9 représentent des modes de réalisation alternatifs dans lesquels le déflecteur 46 présente une configuration ou une géométrie particulière.

Dans le mode de réalisation de la figure 5 et de la figure 6, l'unité de filtration 10 comporte une ailette 72 de déviation du flux. L'ailette 72 fait saillie d'une face inférieure du déflecteur 46. L'ailette 72 est positionnée en regard de l'admission 14 de flux gazeux vicié 16. L'ailette 72 présente un bord extérieur 74 incurvé vers l'intérieur de l'unité de filtration 10 de sorte à maintenir une distance entre le bord extérieur 74 de l'ailette 72 et la paroi latérale 22 du tronçon intermédiaire 42 afin de laisser passer le flux. L'ailette 72 s'étend dans un plan P en biais incliné d'un angle a3 de 45° par rapport à la direction D tangentielle correspondant à la direction du flux de gaz vicié 16 entrant par l'admission 14. L'ailette 72 est typiquement réalisée dans une tôle métallique. L'ailette 72 peut être soudée ou collée au déflecteur 46. L'ailette 72 permet de canaliser le flux de gaz vicié 16 en périphérie de l'enceinte 12.

Dans les modes de réalisation des figures 7 à 9, le déflecteur 46 présente un rétrécissement 76 dans un quatrième cadran C4 du déflecteur 46, le premier cadran C1 étant en regard de l'admission 14 de flux gazeux vicié 16 et les cadrans C1 à C4 étant ordonnés dans le sens du flux gazeux vicié 16.

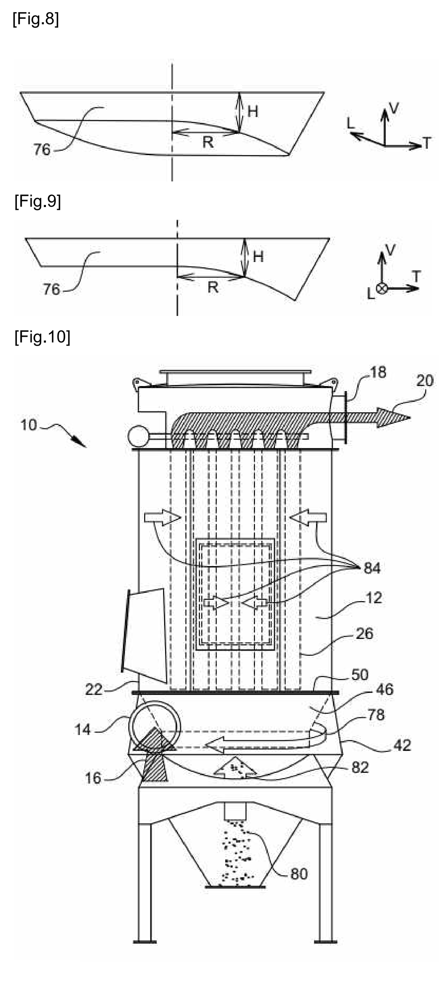

Dans les modes de réalisation des figures 8 et 9, le déflecteur 46 comporte uniquement une première portion 52 de rayon R croissant verticalement dans le sens de l'axe A. Dans les exemples des figures 8 et 9, le déflecteur 46 ne comporte pas de deuxième portion 54 cylindrique ni d'ailette 72.

Dans l'exemple de la figure 8, le rétrécissement 76 est obtenu par une diminution linéaire de la hauteur H du déflecteur 46.

Dans l'exemple de la figure 9, le rétrécissement 76 est obtenu par une diminution plus brutale de la hauteur H du déflecteur 46. La diminution de la hauteur H est par exemple quadratique ou exponentielle.

La figure 10 représente la circulation du flux à l'intérieur de l'unité de filtration 10. Le flux gazeux vicié 16 pénètre de manière tangentielle dans l'enceinte 12 de l'unité de filtration 10 par l'admission 14. Le flux gazeux vicié 16 canalisé par le déflecteur 46 et par la paroi latérale 22 parcourt ensuite la circonférence du tronçon intermédiaire 42 sous la forme d'un flux rotatif 78. L'effet combiné d'un changement de direction du flux de gaz vicié 16 et de la diminution de sa vitesse au contact de la paroi latérale 22 provoque la séparation des particules 80 les plus lourdes par effet cyclonique et la précipitation de ces particules 80 par gravité dans le fond de l'entonnoir 30.

Le flux gazeux remonte ensuite verticalement sous la forme d'un flux vertical 82 depuis l'entonnoir 30 vers le corps principal 24 à travers le passage 50 au centre du déflecteur 46 situé dans le tronçon intermédiaire 42. Le flux vertical 82 ayant pénétré dans le corps principal 24 se disperse dans les interstices entre les différents éléments filtrants 26 sous la forme de flux traversants 84. L'ensemble des flux traversants 84 est filtré et devient le flux gazeux purifié 20 grâce à la traversée la membrane des éléments filtrants 26. Le flux gazeux purifié 20 ainsi obtenu ressort des éléments filtrants 26 par leur ouverture et sort de l'unité de filtration 10 par l'évacuation 18.

Le flux gazeux purifié 20 est ensuite rejeté dans l'atmosphère ou réinjecté dans le circuit gazeux de l'environnement industriel concerné.

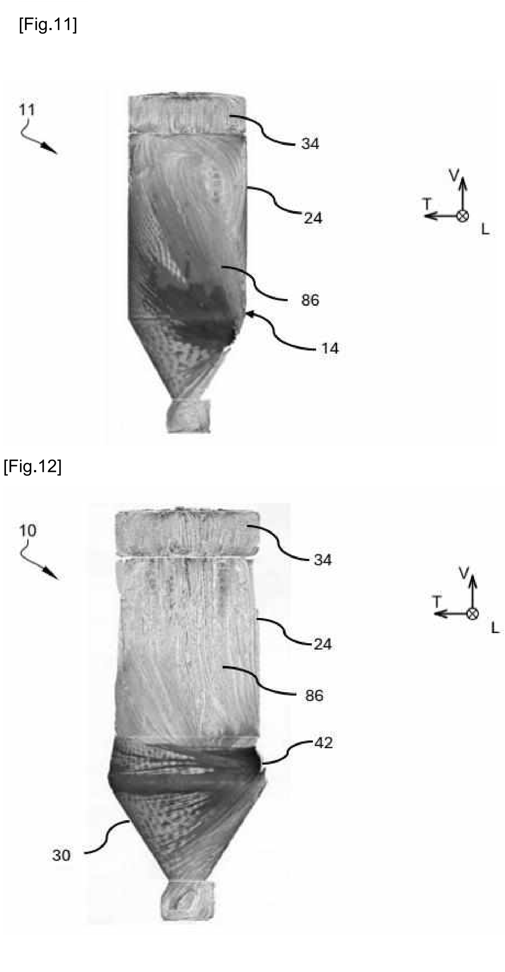

La figure 11 est une représentation en vue de derrière des résultats d'une simulation montrant les trajectoires 86 des particules et du flux d'air au sein d'une unité de filtration 11 de l'art antérieur. Les trajectoires parcourues par les particules avec une vitesse rapide sont représentées en teinte foncée tandis que les trajectoires parcourues avec une vitesse plus lente sont représentées en teinte claire. Dans l'unité de filtration 11 de l'art antérieur, certaines particules remontent directement depuis l'admission 14 jusque dans le corps principal 24 de l'unité de filtration 11. Ce phénomène empêche la décantation d'une grande proportion des particules. En outre, le mélange de trajectoires 86 rapides (en traits clairs) et de trajectoires 86 lentes (en traits foncés) montrent une mauvaise répartition du flux au sein du corps principal 24. On constate un phénomène de rebouclage dans le flux d'air au niveau de l'admission 14 du filtre depuis la partie haute. Cela pose un problème pour la séparation air poussière. La zone de survitesse situé dans la partie supérieure du filtre peut être considérée comme un signe de perte de rendement.

La figure 12 est une représentation d'une simulation équivalente à celle de la figure 11 appliquée à une unité de filtration 10 selon l'invention. Dans l'unité de filtration 10 selon l'invention, les particules restent dans le tronçon intermédiaire 42 et dans l'entonnoir 30 le temps d'effectuer un tour complet de la périphérie du filtre et ne remontent pas directement dans le corps principal 24 de l'unité de filtration 10. En outre, l'homogénéité de la teinte des trajectoires 86 dans le corps principal 24 montre que le flux est réparti horizontalement de manière homogène au sein du filtre par le tronçon intermédiaire 42 et par l'entonnoir 30. Les trajectoires 86 présentent des vitesses plus rapides dans le tronçon intermédiaire 42 et dans l'entonnoir 30 et des vitesses plus lentes dans le corps principal 24.

L'étude comparative des figures 11 et 12 montre que l'invention permet de mieux maintenir le flux dans la zone de décantation formée par le tronçon intermédiaire 42 et l'entonnoir 30 dans laquelle le flux est ralenti par effet cyclonique pour augmenter la quantité de particules éliminées par décantation. En outre, la comparaison des figures 11 et 12 montre que l'invention permet de mieux répartir le flux horizontalement au sein du filtre.

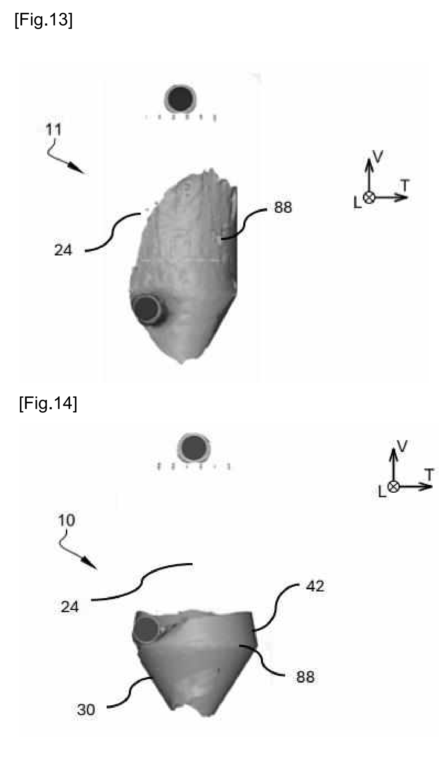

La figure 13 est une représentation en vue de devant des résultats d'une simulation montrant les zones 88 au sein d'une unité de filtration 11 de l'art antérieur dans lesquelles le flux présente une vitesse supérieure à un seuil prédéterminé. La figure 13 montre que le flux présente encore une vitesse importante lorsqu'il remonte dans le corps principal 24 ce qui prouve que la sédimentation n'a pas pu se faire.

La figure 14 est une représentation en vue de devant des résultats d'une simulation équivalente à celle de la figure 13 et appliquée à une unité de filtration 10 selon l'invention. La figure 14 montre qu'il n'y a pas de flux à grande vitesse dans le corps principal 24 de l'unité de filtration 10 ce qui prouve que le flux a été suffisamment ralenti pour permettre la décantation des particules dans l'entonnoir 30 avant la remontée du flux vers le corps principal 24 à travers le passage 50 au centre du déflecteur 46 (non visibles sur la figure) dans le tronçon intermédiaire 42. La comparaison des figures 13 et 14 montre comme précédemment que l'invention favorise la décantation des particules au sein de l'unité de filtration 10.

L'étude comparative ci-dessus permet de montrer que l'invention favorise la décantation des particules ce qui implique que les particules les plus lourdes et les plus grosses sont éliminées principalement dans le tronçon intermédiaire 42 et dans l'entonnoir 30. Ainsi, les éléments filtrants 26 servent principalement à retenir les particules plus fines. En outre, dans la mesure où la majorité des particules sont extraites par décantation, les éléments filtrants 26 s'encrassent moins vite ce qui évite les pertes de charge au sein de l'unité de filtration 10. En outre, les débits et les pressions de fonctionnement sont conservés et les performances de filtration sont améliorées.

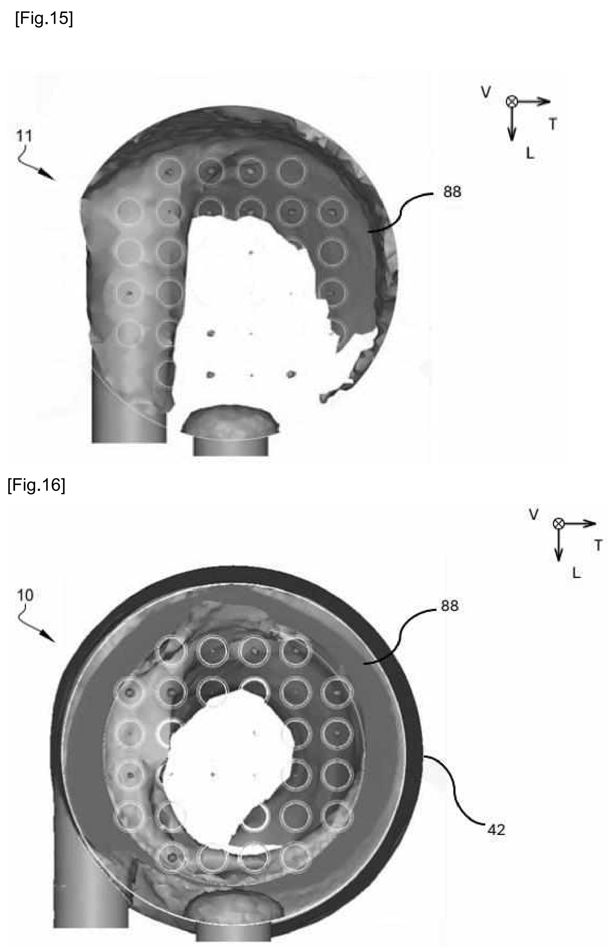

La figure 15 est une représentation en vue de dessus des résultats d'une simulation montrant les zones 88 au sein d'une unité de filtration 11 de l'art antérieur dans lesquelles le flux présente une vitesse supérieure à un seuil prédéterminé. La figure 15 montre une mauvaise répartition du flux au sein de l'unité de filtration 11 de l'art antérieur dans la mesure où le flux présente une vitesse importante sur le premier demi-cercle parcouru, la vitesse du flux étant en dessous du seuil sur le deuxième demi-cercle. La mauvaise répartition du flux entraîne un encrassement prématuré de certains éléments filtrants 26 par rapport à d'autres qui ne sont traversés que par une portion infime du flux.

La figure 16 est une représentation en vue de dessus des résultats d'une simulation équivalente à celle de la figure 15 appliquée à une unité de filtration 10 selon l'invention. La figure 16 montre que le flux a une vitesse supérieure au seuil le long de toute la circonférence du tronçon intermédiaire 42. Par conséquent, le flux est réparti équitablement tout le long du parcours du flux au sein du tronçon intermédiaire 42. Ainsi, les éléments filtrants 26 s'encrasseront de manière relativement uniforme ce qui permet d'espacer davantage les décolmatages et de faciliter les maintenances des éléments filtrants 26 qui seront à changer tous au même moment.

En comparaison des dispositifs de l'art antérieur dans lesquels les particules sont libres de monter et de descendre, les dispositifs selon l'invention comportant un déflecteur 46 et une forme de tronçon intermédiaire 42 selon l'invention favorisent la concentration des particules dans le tronçon intermédiaire 42 puis la descente des particules plutôt que l'ascension de ces dernières. Ainsi, l'invention limite la remontée de particules et donc l'encrassement des éléments filtrants.

Un autre avantage de l'invention réside dans la réduction de la consommation en air comprimé lors du décolmatage.

Légende
- 10: unité de filtration
- 11: unité de filtration de l'art antérieur
- 12: enceinte
- 14: admission
- 16: flux gazeux vicié
- 18: évacuation
- 20: flux gazeux purifié
- 22: paroi latérale
- 24: corps principal
- 26: élément filtrant
- 28: évent
- 30: entonnoir
- 32: embout
- 34: tête
- 36: base
- 38: pied
- 40: espace
- 42: tronçon intermédiaire
- 43: portion inférieure
- 44: première bride
- 45: portion supérieure
- 46: déflecteur
- 48: inclinaison
- 50: passage
- 52: première portion
- 54: deuxième portion
- 56: rebord
- 58: support
- 60: orifice
- 62: ouverture
- 64: deuxième bride
- 66: module de décolmatage
- 68: tuyau
- 70: bombonne
- 72: ailette
- 74: bord extérieur
- 76: rétrécissement
- 78: flux rotatif
- 80: particules
- 82: flux vertical
- 84: flux traversant
- 86: trajectoire
- 88: zone de flux à grande vitesse

## Revendications

1. Unité de filtration (10) de particules en suspension dans un flux gazeux, l'unité de filtration (10) comportant :
- une admission (14) de flux gazeux vicié (16),
- une évacuation (18) de flux gazeux purifié (20),
- un entonnoir (30) de décantation en communication fluidique avec l'admission (14) de flux gazeux vicié (16),
- un corps principal (24) placé au-dessus de l'entonnoir (30) et comportant une paroi latérale (22) et au moins un élément filtrant (26) poreux destiné à être traversé par le flux gazeux vicié (16), l'élément filtrant (26) formant l'interface entre :
-- une partie amont du corps principal (24) en communication fluidique avec l'entonnoir (30), et
-- une partie avale du corps principal (24) en communication fluidique avec l'évacuation (18) de flux gazeux purifié (20) ;
- un déflecteur (46) s'étendant depuis la paroi latérale (22) du corps principal (24), au-dessus de l'admission (14) de flux gazeux vicié (16), vers l'intérieur de l'unité de filtration (10) selon une forme de cuvette évidée en son centre,
l'unité de filtration (10) étant **caractérisée en ce que** le déflecteur (46) présente un rétrécissement (76) dans un quatrième cadran (C4) du déflecteur (46), le premier cadran (C1) étant en regard de l'admission (14) de flux gazeux vicié (16) et les cadrans (C1-C4) étant ordonnés dans le sens du flux.

2. Unité de filtration (10) selon la revendication 1 **caractérisée en ce que** le corps principal (24) et l'entonnoir (30) de décantation présentent un même axe de symétrique de révolution A.

3. Unité de filtration selon la revendication 2 **caractérisée en ce que** le déflecteur (46) comporte une première portion (52) de forme tronconique ayant le même axe de révolution A que l'entonnoir (30) et que le corps principal (24) est cylindrique de section circulaire orthogonalement à l'axe A de rayon R croissant avec la hauteur.

4. Unité de filtration (10) selon la revendication 3 **caractérisée en ce que** le déflecteur (46) comporte une deuxième portion (54) dans le prolongement de la première portion (52) en partie inférieure de forme tubulaire d'axe A.

5. Unité de filtration (10) selon l'une quelconque des revendications précédentes **caractérisée en ce qu'**elle comporte une ailette (72) de déviation du flux faisant saillie du déflecteur (46) en regard de l'admission (14) de flux gazeux vicié (16).

6. Unité de filtration (10) selon l'une quelconque des revendications précédentes **caractérisée en ce qu'**elle comporte un tronçon intermédiaire (42) présentant une forme tronconique présentant le même axe de révolution A que l'entonnoir (30) et que le corps cylindrique (24) et présentant une section circulaire orthogonalement à l'axe A de rayon décroissant avec la hauteur, le tronçon intermédiaire (42) étant placé à la jonction entre le corps principal (24) et l'entonnoir (30).

7. Unité de filtration (10) selon la revendication 6 **caractérisée en ce que** l'admission (14) de flux gazeux vicié (16) est située dans le tronçon intermédiaire (42).

8. Unité de filtration (10) selon la revendication 6 ou 7 **caractérisée en ce que** l'angle a1 du tronçon intermédiaire (42) par rapport à l'axe A a une valeur absolue inférieure à celle de l'angle a2 de l'entonnoir (30) par rapport à l'axe A.

9. Unité de filtration (10) selon l'une quelconque des revendications 6 à 8, **caractérisée en ce que** le déflecteur (46) s'étend sur au moins la moitié de la hauteur du tronçon intermédiaire (42).
